# EUROPÄISCHE PATENTSCHRIFT

(11) **EP 3 458 787 B1**
(45) Veröffentlichungstag und Bekanntmachung des Hinweises auf die Patenterteilung: **11.09.2019**
(21) Anmeldenummer: 17708716.0
(22) Anmeldetag: 24.02.2017
(51) Int. Cl.: F27B 17/02, A61C 13/20, F27D 9/00, F27D 19/00, F27D 21/00

(54) **INDUKTIONSOFEN UND VERFAHREN ZUR DURCHFÜHRUNG EINER WÄRMEBEHANDLUNG EINES ZAHNERSATZTEILS**
INDUCTION FURNACE AND METHOD FOR CARRYING OUT A HEAT TREATMENT OF A DENTAL REPLACEMENT PART
FOUR À INDUCTION ET PROCÉDÉ POUR FAIRE SUBIR UN TRAITEMENT THERMIQUE À UN ÉLÉMENT PROTHÉTIQUE DENTAIRE

(30) Priorität: 24.02.2016 DE 102016202902
(43) Veröffentlichungstag der Anmeldung: 27.03.2019
(73) Patentinhaber: Sirona Dental Systems GmbH, 64625 Bensheim (DE)
(72) Erfinder: SCHMIDT, Christian, 64625 Bensheim (DE); BÄURER, Michael, 75015 Bretten (DE)
(74) Vertreter: Özer, Alpdeniz
(86) Internationale Anmeldenummer: PCT/EP2017/054289
(87) Internationale Veröffentlichungsnummer: WO 2017/144644

(56) Entgegenhaltungen:
- DE-A1-102008 013 555
- DE-A1-102014 202 575

## Beschreibung

### Technisches Gebiet

Die Erfindung betrifft einen Induktionsofen zur Durchführung einer Wärmebehandlung eines Zahnersatzteils umfassend eine Induktionsspule, einen Heizstrahler, eine Isolationsschicht und eine Ofenkammer.

### Stand der Technik

Aus dem Stand der Technik sind mehrere Sinteröfen zur Durchführung von Wärmebehandlungen von Zahnersatzteilen bekannt.

DE 10 2014 202 575 A1 offenbart einen Sinterofen für Bauteile im Dentalbereich umfassend einer Ofenkammer und eine Aufheizvorrichtung, wobei die Aufheizvorrichtung einen thermischen Strahler aufweist. Die Erwärmung des thermischen Strahlers kann induktiv erfolgen, wobei eine umlaufende Spule den thermischen Strahler in Form eines Tiegels aufheizt.

DE 10 2012 213 279 A1 offenbart einen Sinterofen für Zahnersatzteile aus Keramik, wobei der Sinterofen Antriebsmittel aufweist, die computergesteuert bedient werden können und eine Ladesequenz ermöglichen. In einem Speicher des Sinterofens sind mehrere Temperaturprofile abgespeichert, wobei ein passendes Temperaturprofil in Abhängigkeit von der Größe des Zahnersatzteils ausgewählt wird. Die Temperaturprofile unterscheiden sich bezüglich der Aufheizrate und der Haltezeit.

DE 10 2006 032 655 A1 offenbart einen Sinterofen für Zahnersatzteile, wobei der Sinterofen eine Verschlussplatte zur Positionierung des Zahnersatzteils aufweist, wobei innerhalb der Brennkammer ein Messsystem zur Vermessung der Innentemperatur angeordnet ist. Die Positionierung der Verschlussplatte relativ zum Dentalofen wird mittels eines Computersystems temperaturabhängig gesteuert.

DE 10 2013 226 497 A1 offenbart ein Verfahren zur Planung einer Wärmebehandlung eines Zahnersatzteils, wobei in Abhängigkeit von Geometrieparametern und Materialparametern des Zahnersatzteils ein bestimmtes Temperaturprofil für die Wärmebehandlung mittels eines Computers automatisch bestimmt wird. Die Temperaturprofile unterscheiden sich dabei bezüglich der Heizrate während einer Aufheizphase, bezüglich der Haltetemperatur, bezüglich der Haltezeit und bezüglich einer Abkühlrate während einer Abkühlphase.

DE 10 2008 013 555 A1 offenbart einen Sinterofen zur Herstellung von Zahnersatzteilen, wobei das Sintern der Zahnersatzteile entlang einer Sinterstrecke erfolgt. Die Zahnersatzteile werden beim Durchfahren einer Sinterstrecke unterschiedlichen Temperaturen ausgesetzt. Die Sinterstrecke ist also in einzelne Sinterstreckensegmente eingeteilt, die auf verschiedene Temperaturen eingeregelt werden können. Die Träger mit den zu sinternden Zahnersatzteilen werden entlang der Sinterstrecke mittels eines Schiebers bewegt. Für jedes der Sinterstreckensegmente können unterschiedliche Temperaturen eingestellt werden. Dadurch können also unterschiedliche Temperaturverläufe für die Sinterung unterschiedlicher Keramiken eingestellt werden.

Ein Nachteil der genannten Verfahren und Sinteröfen besteht darin, dass durch eine relativ hohe thermische Masse der Brennkammer die Abkühlphase nach der Sinterung bei geschlossener Ofentür sehr lange dauern kann. Dadurch wird also die gesamte Dauer des Sinterungsprozesses verlängert. Ein weiterer Nachteil der herkömmlichen Sinteröfen besteht darin, dass die Innentemperatur der Ofenkammer besonders in der Abkühlphase nicht genau genug reguliert werden kann.

Die Aufgabe der vorliegenden Erfindung besteht daher darin, einen Sinterofen und ein Verfahren bereitzustellen das eine schnelle Abkühlphase mit einer regelbaren Abkühlrate ermöglicht.

### Darstellung der Erfindung

Die Erfindung betrifft einen Induktionsofen zur Durchführung einer Wärmebehandlung eines Zahnersatzteils umfassend eine Induktionsspule, einen Heizstrahler, eine Isolationsschicht und eine Ofenkammer. Der Induktionsofen weist dabei ein Kühlsystem mit einer Flüssigkeitskühlung auf, wobei das Kühlsystem die Induktionsspule und damit den neben der Induktionsspule angeordneten Heizstrahler abkühlt, so dass eine Innentemperatur der Ofenkammer mittels des Kühlsystems reguliert wird.

Der Induktionsofen ist so ausgelegt, dass Zahnersatzteile aus unterschiedlichen dentalen Materialien gesintert werden können. Dabei ist wesentlich, dass eine Innentemperatur in der Ofenkammer von 1600°C erreicht werden kann. Eine weitere Voraussetzung ist, dass das Volumen der Ofenkammer relativ klein bemessen ist, um ein schnelles Aufheizen und ein schnelles Abkühlen zu ermöglichen.

Das Material der Zahnersatzteile kann eine Oxidkeramik insbesondere Zirkonoxid, wie beispielsweise Zirkoniumdioxid, oder Aluminiumoxid, sowie Nichtedelmetalllegierungen, wie eine CoCrMo-Legierung oder andere Co-Basis-Legierungen, sein. Ein Zahnersatzteil aus transluzentem Zirkonoxid kann eine Verblendung aufweisen. Das Zahnersatzteil kann auch aus einem voreingefärbten transluzenten Zironiumoxid hergestellt sein, wobei helle oder dunkle Farbstoffe beigemischt werden können. Die Farbe der voreingefärbten Blöcke zur Herstellung der Zahnersatzteile wird in der Dentaltechnik in mehrere Farben A1, A2, A3, A4, B2, B3, C2, C3, D3 unterteilt (siehe VITA-Farbklassen). Häufig werden die Farben des in DE10346465A1 zitierten Vita Farbschlüssels (Vita Lamin-Shade Guide)verwendet. Die Farben A1, A2 und A3 zählen dabei zu den meist verwendeten hellen Farbstoffen. Die übrigen Farben sind dunkler und werden seltener zur Herstellung von Zahnersatz teilen verwendet. Solche Rohlinge werden unter dem Namen "inCoris TZI C" oder "CEREC Zirconia" angeboten.

Das herzustellende Zahnersatzteil kann beispielsweise eine Vollprothese für ein Implantat, eine Dentalprothese, eine Gerüststruktur, eine Vollkrone, eine Teilkrone, eine Brücke aus mehreren ganzen Zähnen oder ein Inlay sein.

Die Wärmebehandlung kann eine Sinterung, Kristallisierung oder eine Glasurbeschichtung oder eine Kombination aus Kristallisierung und Glasurbeschichtung sowie eine Kombination aus Sinterung und Glasurbeschichtung eines Zahnersatzteils sein.

Bei der Sinterung werden Zahnersatzteile aus Oxidkeramiken, wie Zirkonoxid und Aluminiumdioxid sowie aus Nichtedelmetalllegierungen, wie aus einer CoCr-Legierung, durchgesintert. Dabei wird das Zahnersatzteil innerhalb einer Aufheizphase mit einer bestimmten Heizrate auf eine Haltetemperatur aufgeheizt. Anschließend wird diese Haltetemperatur, die bis zu 1600°C betragen kann, für eine festgelegte Haltezeit gehalten, die beispielsweise zwischen 5 Minuten und 40 Minuten betragen kann. Im weiteren Schritt erfolgt eine Abkühlphase mit einer bestimmten Abkühlrate bei geschlossener Tür, wobei die Abkühlrate zwischen 30°C/ Minute bis 300°C/ Minute betragen kann. Die Abkühlphase bei geschlossener Tür erfolgt bis zum Erreichen einer festgelegten Öffnungstemperatur, wobei bei Erreichen der Öffnungstemperatur die Ofentür geöffnet wird und Luft von außen in die Ofenkammer einströmen kann. Die Öffnungstemperatur kann beispielsweise bei Zirkonoxid mit hellen Farbstoffen der Klasse A1, A2 oder A3 bis zu 1300°C und bei Zirkonoxid mit dunkleren Farbstoffen bis zu 1100°C betragen. Die Öffnungstemperatur kann auch bei 700°C für Zirkonoxide festgelegt werden, da bei dieser Temperatur eine Diffusionsoffenheit des Zirkonoxids drastisch abnimmt. Bei Temperaturen über 700°C ist die Diffusionsoffenheit des Zirkonoxids so hoch, dass Luftmoleküle, wie Sauerstoff, mit dem Zirkonoxid reagieren können. Diese Reaktion führt meistens zu einer helleren Färbung des Zahnersatzteils als geplant.

Eine Kristallisierung erfolgt insbesondere bei Glaskeramiken mit dem Werkstoffsystem Lithiumdisilikat.

Alle metallischen und keramischen Grundwerkstoffe können durch weitere Brennprozesse nach der Sinterung verblendet oder glasiert werden. Zusammen mit der Glasur als ein sogenanntes Oberflächenfinish kann auch eine Bemalung erfolgen, die im gleichen Ofenprozess gebrannt wird. Die Glaskeramik hat darüber hinaus den Vorteil, dass sie im selben Brennprozess kristallisiert, bemalt und glasiert werden kann.

Die Induktionsspule wird von Wechselstrom durchflossen, sodass dadurch im Inneren der Induktionsspule ein magnetisches Wechselfeld aufgebaut wird. Dadurch wird also der elektrisch leitende Heizstrahler, der innerhalb der Induktionsspule angeordnet ist und die Innenwand der Ofenkammer bildet, aufgeheizt. Damit steigt also die Innentemperatur innerhalb der Ofenkammer und das Zahnersatzteil, das innerhalb der Ofenkammer positioniert ist, wird erhitzt. Die Induktionsspule ist mit einer Flüssigkeitskühlung versehen, wobei als Kühlflüssigkeit Wasser verwendet werden kann.

Ein Vorteil dieses Induktionsofens besteht darin, dass im Vergleich zu herkömmlichen Sinteröfen durch das Regeln des magnetischen Wechselfeldes die Temperatur des Heizstrahlers und damit die Innentemperatur der Ofenkammer genauer und vor allem schneller mit höheren Heizraten oder höheren Abkühlraten geregelt werden kann.

Ein weiterer Vorteil dieses Induktionsofens besteht darin, dass durch die Verwendung der Flüssigkeitskühlung die Induktionsspule und damit der innerhalb der Induktionsspule angeordnete Heizstrahler gekühlt werden können. Damit kann also mittels der Flüssigkeitskühlung die Innentemperatur innerhalb der Ofenkammer insbesondere während der Abkühlphase reguliert werden. In der Abkühlphase kann der Wechselstrom vollständig abgeschaltet werden und die Flüssigkeitskühlung auf Hochleistung laufen, so dass eine maximale Abkühlung der Innentemperatur der Ofenkammer erreicht werden kann.

Vorteilhafterweise kann die Induktionsspule mit Wechselstrom betrieben werden und der Heizstrahler durch ein magnetisches Wechselfeld der Induktionsspule erhitzt werden.

Durch die Verwendung einer Induktionsspule wird die Reaktionszeit im Vergleich zu Sinteröfen mit Heizdrähten erhöht.

Denn durch den magnetischen Wechselstrom wird der Heizstrahler, der zugleich die Innenwand der Ofenkammer bildet, unmittelbar erhitzt.

Vorteilhafterweise kann der Heizstrahler die Innenwand der Ofenkammer bilden, wobei innerhalb der Ofenkammer das zu behandelnde Zahnersatzteil angeordnet wird.

Dadurch wird durch das magnetische Wechselfeld der leitende Heizstrahler unmittelbar erhitzt, sodass die Innentemperatur der Ofenkammer und damit das Zahnersatzteil schnell auf eine gewünschte Temperatur erhitzt werden kann.

Vorteilhafterweise kann der Heizstrahler in Form eines Zylinders geformt sein, wobei der Durchmesser des Heizstrahlers höchstens 90 mm und die Höhe des Heizstrahlers höchstens 50 mm beträgt.

Durch das relativ kleine Volumen der Ofenkammer ist die thermische Masse des Induktionsofens relativ gering, so dass die Ofenkammer unter Verwendung der Flüssigkeitskühlung im Vergleich zu herkömmlichen Sinteröfen sehr schnell abgekühlt werden kann. Das Volumen der Ofenkammer ist jedoch so bemessen, dass auch größere Zahnersatzteile, wie Brücken aus mehreren Zähnen, gesintert werden können.

Vorteilhafterweise kann der Heizstrahler aus einer leitfähigen Nichtoxidkeramik oder aus Molybdändisilizid hergestellt sein.

Der Heizstrahler kann aus einer leitfähigen Nichtoxidkeramik, wie Siliziumkarbid, oder aus Molybdändisilizid hergestellt sein. Der Vorteil von Siliziumkarbid besteht darin, dass dieses Material zwar elektrisch leitfähig ist, aber eine Schmelztemperatur von 2730°C aufweist. Dadurch wird also das Erreichen der erforderlichen Innentemperaturen ermöglicht. Molybdändisilizid ist eine intermetallische chemische Verbindung des Molybdäns aus der Gruppe der Silizide mit einem Schmelzpunkt zwischen 1870 und 2030 °C.

Vorteilhafterweise kann das Kühlsystem einen Lüfter, einen Radiator und eine Pumpe umfassen, wobei die Induktionsspule aus einem hohlen Metallrohr geformt ist, das mit einer Kühlflüssigkeit durchströmt wird, wobei die Kühlflüssigkeit durch die Pumpe im Kühlkreislauf bewegt wird, wobei der Radiator vom aktiven Lüfter mit kühler Luft gekühlt wird, um die Kühlflüssigkeit abzukühlen.

Die Induktionsspule kann beispielsweise aus einem hohlen Metallrohr einer Kupferlegierung hergestellt sein. In der Abkühlphase kann also bei abgeschaltetem Wechselstrom das Kühlsystem auf Hochleistung betrieben werden. Dabei bläst der aktive Lüfter kühle Luft zum Radiator hin, der wiederrum die Kühlflüssigkeit, wie Wasser, abkühlt. Die Kühlflüssigkeit wird dann mittels der Pumpe im Kühlkreislauf bewegt und kühlt die Induktionsspule ab.

Vorteilhafterweise kann der Induktionsofen eine Kühlregelung des Kühlsystems aufweisen, wobei innerhalb der Ofenkammer ein Temperatursensor angeordnet ist, der eine Innentemperatur der Ofenkammer erfasst, wobei die Kühlregelung den Lüfter und die Pumpe so ansteuert, dass eine Temperatur der Induktionsspule und damit die Innentemperatur innerhalb der Ofenkammer reguliert wird.

Der Temperatursensor kann beispielsweise ein Thermoelement sein, der für hohe Temperaturen bis 1700°C oder höher ausgelegt ist. Der Temperatursensor wird beispielsweise an einer oberen Innenwand der Ofenkammer angeordnet. Die Kühlregelung kann also mittels eines Computers erfolgen, wobei die Innentemperatur mittels des Temperatursensors erfasst wird und der Lüfter und die Pumpe zum Abkühlen angesteuert werden und zum Aufheizen ein bestimmter Wechselstrom an der Induktionsspule angelegt wird. Auf diese Weise kann die gewünschte Innentemperatur innerhalb der Ofenkammer jederzeit vollautomatisch mittels der Kühlregelung erreicht werden. Vorteilhafterweise kann die Isolationsschicht zwischen dem Heizstrahler und der Induktionsspule angeordnet sein, wobei die Isolationsschicht eine Dicke von höchstens 5 mm beträgt.

Die Isolationsschicht verhindert eine Abwärme beim Erhitzen der Ofenkammer. Die Isolationsschicht ist jedoch so dünn ausgestaltet und so angeordnet, dass durch das Abkühlen der Induktionsspule auch der Heizstrahler abgekühlt wird. Die Isolationsschicht verhindert auch, dass die Induktionsspule, die aus einer Kupferlegierung besteht, durch eine zu hohe Hitze des Heizstrahlers beschädigt wird. Vorteilhafterweise kann der Induktionsofen eine Ofentür aufweisen, wobei die Ofentür eine Auflagefläche aufweist, worauf das zu behandelnde Zahnersatzteil positioniert wird, wobei die Auflagefläche bei geschlossener Ofentür eine untere Innenfläche der Ofenkammer bildet.

Die Ofentür kann also einen oberen Türstein mit der Auflagefläche aufweisen, worauf das Zahnersatzteil positioniert wird. Der Sinterofen kann darüber hinaus Antriebsmittel aufweisen, die eine Verstellung der Ofentür relativ zum Heizstrahler ermöglichen. Dadurch kann mittels eines Computers der Induktionsofen zum Öffnen und zum Schließen der Ofentür angesteuert werden. Vor dem Sintern wird also im ersten Schritt das Zahnersatzteil auf der Auflagefläche positioniert. Im zweiten Schritt wird die Ofentür geschlossen, indem der obere Türstein computergestützt unter Verwendung der Antriebsmittel in die Ofenkammer hineinfährt. Nach dem Sintervorgang wird im weiteren Schritt die Ofentür geöffnet, indem der obere Ofenstein mit der Auflagefläche aus der Ofenkammer hinausgefahren wird. Die Ofenkammer kann beispielsweise die Form eines Zylinders aufweisen, wobei die Mantelfläche der Ofenkammer durch den Heizstrahler gebildet ist, wobei die obere Fläche der Ofenkammer durch eine Isolationsschicht abgedeckt ist, wobei die untere Innenfläche der Ofenkammer maßgeblich durch die Auflagefläche der Ofentür gebildet ist. Zwischen dem Heizstrahler und der Induktionsspule ist ebenfalls eine Isolationsschicht angeordnet.

Die Erfindung betrifft weiterhin ein Verfahren zur Durchführung einer Wärmebehandlung unter Verwendung des Induktionsofens, wobei das Kühlsystem die Induktionsspule und damit den neben der Induktionsspule angeordneten Heizstrahler abkühlt, so dass eine Innentemperatur der Ofenkammer mittels des Kühlsystems reguliert wird.

Dieses Verfahren ermöglicht die Durchführung einer Wärmebehandlung unter Verwendung des oben beschriebenen Induktionsofens.

Ein Vorteil dieses Verfahrens besteht darin, dass unter Verwendung des Kühlsystems die Innentemperatur der Ofenkammer genau reguliert werden kann. Durch die geringe thermische Masse des Heizstrahlers im Vergleich zu Sinteröfen mit Heizspulen wird eine schnelle Abkühlung der Innentemperatur ermöglicht.

Durch eine solche Heizrate oder eine solche Abkühlrate werden sehr schnelle Sintervorgänge ermöglicht. Im Vergleich dazu wird bei herkömmlichen Sinteröfen mit spiralförmigen oder U-förmigen Widerstandsheizelementen eine Abkühlrate von weniger als 20°C pro Minute bei einer geschlossenen Ofentür erreicht. Die Abkühlphase von 1600°C bis 800°C kann damit bis zu 50 Minuten dauern. Beim vorliegenden Verfahren mit dem vorliegenden Induktionsofen dauert eine solche Abkühlphase zwischen 4 Minuten und 15 Minuten. Eine zu hohe Heizrate beziehungsweise Abkühlrate kann insbesondere bei Zahnersatzteilen mit einem großen Volumen zu thermischen Spannungen und damit zu Rissen des Zahnersatzteils führen. Deshalb ist es wesentlich die Heizrate beziehungsweise Abkühlrate unter Verwendung des Kühlsystems genau zu regulieren.

Ein weiterer Vorteil des vorliegenden Verfahrens besteht darin, dass die Ofentür während der Abkühlphase geschlossen bleibt, so dass keine frische Luft von außen in die Ofenkammer eindringen kann. Dadurch wird also verhindert, dass kühle Luft von außen das erhitzte Zahnersatzteil zu schnell abkühlt und es dadurch zu unerwünschten, beispielsweise grünen Verfärbungen führen kann. Denn Zirkonoxid weist bei einer Temperatur von höher als 700°C eine erhöhte Diffusionsoffenheit und damit eine erhöhte Reaktionsfähigkeit mit Sauerstoffmolekülen der Luft auf.

Vorteilhafterweise kann mittels einer Kühlregelung des Kühlsystems die Innentemperatur der Ofenkammer so geregelt werden, dass in einer Aufheizphase bei geschlossener Ofentür die Innentemperatur der Ofenkammer mit einer festgelegten Heizrate zwischen 30 °C/Minute und 300 °C/Minute erhöht wird oder in einer Abkühlphase bei geschlossener Ofentür die Innentemperatur der Ofenkammer mit einer festgelegten Abkühlrate zwischen 30 °C/Minute und 200 °C/Minute fällt.

Vorteilhafterweise kann die Wärmebehandlung eine Sinterung sein, wobei in Abhängigkeit von Geometrieparametern des zu sinternden Zahnersatzteils die Abkühlrate der Abkühlphase festgelegt wird, wobei die Abkühlrate bei kleinen Zahnersatzteilen, wie einer Krone eines einzelnen Zahns, zwischen 100 und 200 °C/Minute beträgt, wobei die Abkühlrate bei größeren Zahnersatzteilen, wie einer mehrgliedrigen Brücke bestehend aus mindestens drei Zähnen, zwischen 30 und 60 °C/Minute beträgt.

Die Geometrieparameter des zu sinternden Zahnersatzteils sind beispielsweise eine maximale laterale Wandstärke, eine maximale okklusale Wandstärke, ein Verhältnis aus der maximalen okklusalen Wandstärke und der maximalen lateralen Wandstärke, ein maximaler Querschnitt des Zahnersatzteils, ein Gesamtvolumen des Zahnersatzteils, eine maximale Gesamtlänge des Zahnersatzteils und/oder eine maximale Querschnittsänderung des Zahnersatzteils. Diese Geometrieparameter sind aus der Planung des Zahnersatzteils bei Verwendung eines CAD/CAM-Verfahrens bekannt oder können automatisch mittels eines Computers bestimmt werden.

Die maximale laterale Wandstärke bezieht sich auf die seitliche Wandstärke des Zahnersatzteils beispielsweise an den Labialflächen von Schneidezähnen beziehungsweise bei Buckalflächen von Backenzähnen. Die maximale okklusale Wandstärke bezieht sich auf die Wandstärke einer Okklusalfläche des Zahnersatzteils. Der maximale Querschnitt des Zahnersatzteils bezieht sich auf einen Querschnitt senkrecht zu einer Zahnachse des Zahnersatzteils.

Ausgehend von den Geometrieparametern wird also eine passende Abkühlrate bestimmt, die keine thermischen Spannungen innerhalb des Zahnersatzteils verursacht.

Bei einem weiteren computergestützten Verfahren wird innerhalb des Volumens des geplanten Zahnersatzteils mittels eines Suchalgorithmus eine virtuelle größtmögliche Kugel ermittelt. Der Durchmesser einer solchen größtmöglichen Kugel im Volumen des geplanten Zahnersatzteils dient dann als ein weiterer Geometrieparameter bei der Auswahl oder Bestimmung eines passenden Temperaturverlaufs für den Sinterprozess. Beim Durchmesser der größtmöglichen Kugel von höher als 4,5 mm darf beispielsweise die Heizrate und die Abkühlrate beim Zirkonoxid 80 °C/ Minute nicht überschreiten. Denn eine höhere Heizrate könnte zu thermischen Spannungen und dadurch zu Rissen im Zahnersatzteil führen. Beim Durchmesser der größtmöglichen Kugel von kleiner als 3 mm kann die Heizrate beispielsweise bis zu 200 °C/ Minute betragen.

Vorteilhafterweise kann unter Verwendung der bekannten Geometrieparameter des Zahnersatzteils und einer gewünschten Farbe des Zahnersatzteils ein passender Temperaturverlauf mittels eines Computers automatisch bestimmt werden oder ein passender Temperaturverlauf aus einer Vielzahl von Temperaturverläufen aus einer Datenbank ausgewählt werden, wobei der Temperaturverlauf eine Aufheizphase mit einer bestimmten Heizrate, eine Haltephase mit einer bestimmten Haltetemperatur, eine erste Abkühlphase mit einer bestimmten Abkühlrate bei geschlossener Ofentür sowie eine zweite Abkühlphase bei geöffneter Ofentür, deren Beginn durch eine Öffnungstemperatur für die Ofentür bestimmt wird, aufweist, wobei eine passende Heizrate oder Abkühlrate anhand der bekannten Geometrieparameter des Zahnersatzteils abgeleitet wird und die Kühlregelung des Kühlsystems entsprechend angesteuert wird, um die gewünschte Heizrate oder Abkühlrate zu erreichen.

Dadurch wird also in Abhängigkeit von bekannten Geometrieparametern und der gewünschten Farbe des Zahnersatzteils ein passender Temperaturverlauf bestimmt oder ausgewählt. Die Höhe der Heizrate und der Abkühlrate ist dabei von den Geometrieparametern des Zahnersatzteils abhängig. Die Höhe der Öffnungstemperatur hat dabei einen Einfluss auf die Farbe des Zahnersatzteils. Bei Zirkonoxid führt eine zu hohe Öffnungstemperatur dazu, dass Zirkonoxid mit den Sauerstoffmolekülen der Luft reagiert und dadurch eine hellere Farbe des Zahnersatzteils als geplant erzeugt wird.

Die gewünschte Abkühlrate wird also unter Verwendung der Kühlregelung erreicht. Zum Abkühlen der Ofenkammer wird der Wechselstrom der Induktionsspule abgeschaltet und der Lüfter sowie die Pumpe der Flüssigkeitskühlung eingeschaltet. Zum Aufheizen der Ofenkammer wird der Wechselstrom der Induktionsspule eingeschaltet und der Lüfter sowie die Pumpe der Flüssigkeitskühlung abgeschaltet beziehungsweise heruntergeregelt.

Vorteilhafterweise kann die Ofentür bei einer festgelegten Öffnungstemperatur geöffnet wird, wobei die Öffnungstemperatur in Abhängigkeit von der gewünschten Farbe des Zahnersatzteils festgelegt wird.

Dadurch wird also sichergestellt, dass bis zum Erreichen der Öffnungstemperatur das Zahnersatzteils kontrolliert mit einer festgelegten Abkühlrate abgekühlt wird, um eine gewünschte Farbe des Zahnersatzteils zu erreichen. Nach dem Öffnen der Ofentür wird dann das Zahnersatzteil durch das Einströmen der kühlen Luft sehr schnell abgekühlt.

Vorteilhafterweise kann das Zahnersatzteil aus einem voreingefärbten Zirkonoxid mit Farbstoffen bestehen, wobei die Ofentür bei einer festgelegten Öffnungstemperatur geöffnet wird, wobei die Öffnungstemperatur bei einem Zirkonoxid mit hellen Farbstoffen höchstens 1300 °C beträgt, wobei die Öffnungstemperatur bei einem Zirkonoxid mit dunklen Farbstoffen höchstens 1100 °C beträgt.

Dadurch wird die Ofentür abhängig vom verwendeten Material bei einer festgelegten Öffnungstemperatur geöffnet.

Vorteilhafterweise kann die Ofentür bei der festgelegten Öffnungstemperatur automatisch geöffnet werden.

Das Öffnen der Ofentür erfolgt also automatisch mittels eines Computers, wobei die Innentemperatur mittels des Temperatursensors vermessen wird und sobald die festgelegte Öffnungstemperatur erreicht ist die Antriebsmittel zum Öffnen der Ofentür angesteuert werden.

Vorteilhafterweise kann bei der festgelegten Öffnungstemperatur ein akustisches oder optisches Signal zur Anzeige des Erreichens der Öffnungstemperatur erfolgen.

Das Erreichen der Öffnungstemperatur wird also mittels eines akustischen oder visuellen Anzeigemittels angezeigt. Daraufhin kann der Benutzer die Ofentür manuell oder durch das Ansteuern der Antriebsmittel der Ofentür öffnen.

Das verwendete Material kann bei der Planung des Zahnersatzteils durch den Benutzer eingegeben werden, sodass eine passende Öffnungstemperatur automatisch mittels des Computers festgelegt wird, die für das verwendete Material geeignet ist.

Die Öffnungstemperatur bei Zirkonoxid kann auch höchstens 700 °C betragen. Denn unterhalb von 700 °C ist die Diffusionsoffenheit des Zirkonoxids so niedrig, dass Luftmoleküle, wie Sauerstoff, mit dem Zirkonoxid nicht mehr reagieren können. Dadurch kann also das Zahnersatzteil aus Zirkonoxid unterhalb von 700 °C viel schneller mit einer höheren Abkühlrate abgekühlt werden, ohne dass unerwünschte, beispielsweise grüne Verfärbungen entstehen.

Das gefärbte Zirkonoxid als Sintermaterial für Zahnersatzteile enthält meistens Farbstoffe aus Eisenoxid. Zusätzlich kann das Sintermaterial Aluminiumoxid als Sinterhilfe in der Höhe zwischen 0,05 und 0,35 Vol.-% enthalten. Das Eisenoxid im Gitter des Zirkonoxids reagiert dann bei einer hohen Diffusionsoffenheit des Gitters des Zirkonoxids mit den Sauerstoffmolekülen der Luft, so dass dies zu unerwünschten Verfärbungen des Eisenoxids führen kann. Der Volumenanteil von Eisenoxid bestimmt dann die Farbe des Sintermaterials.

Vorteilhafterweise kann die Wärmebehandlung des Zahnersatzteils eine Sinterung, eine Kristallisierung, eine Glasurbeschichtung , eine Kombination aus einer Sinterung und einer Glasurbeschichtung oder eine Kombination aus einer Kristallisierung und einer Glasurbeschichtung sein, wobei in einer Aufheizphase bei geschlossener Ofentür die Innentemperatur der Ofenkammer mit einer festgelegten Heizrate aufgeheizt wird.

Dadurch kann während der Aufheizphase sowie während der Abkühlphase die gewünschte Innentemperatur einer bestimmten Wärmebehandlung variiert werden.

### Kurzbeschreibung der Zeichnungen

Die Erfindung wird anhand der Zeichnungen erläutert. Es zeigt, die
- Fig. 1: eine Skizze zur Verdeutlichung des vorliegenden Verfahrens, die
- Fig. 2: mehrere Abkühlphasen von Temperaturprofilen.

### Ausführungsbeispiele

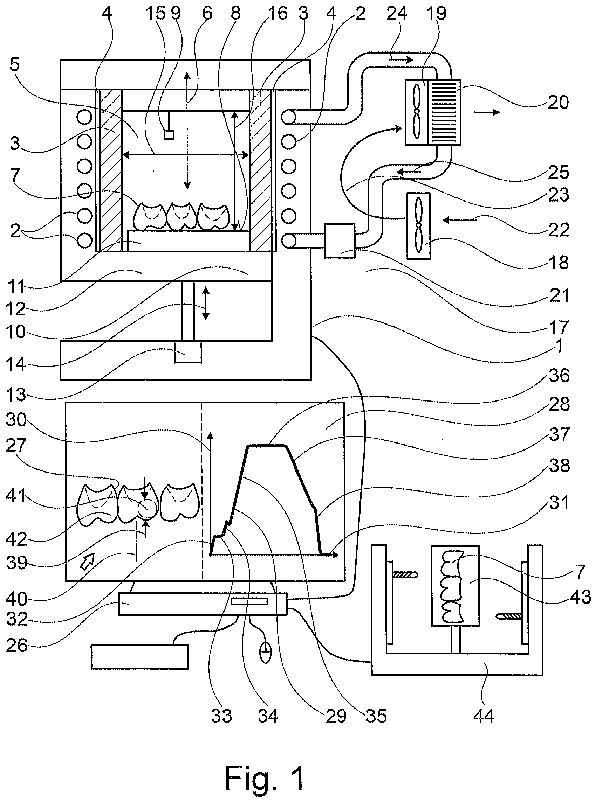

Die Fig. 1 zeigt eine Skizze zur Verdeutlichung des vorliegenden Verfahrens zur Durchführung einer Wärmebehandlung unter Verwendung eines Induktionsofens 1, wobei der Induktionsofen 1 eine wassergekühlte Induktionsspule 2, einen Heizstrahler 3, eine Isolationsschicht 4 und eine Ofenkammer 5 aufweist. Die Induktionsspule 2 ist aus einem hohlen Rohr aus einer Kupferlegierung gefertigt, wobei die Induktionsspule 2 um den Heizstrahler 3 angeordnet ist. Die Induktionsspule 2 wird mit Wechselstrom betrieben, sodass im Inneren der Induktionsspule 2 ein magnetisches Wechselfeld 6 aufgebaut wird. Dadurch wird also der elektrisch leitende Heizstrahler 3, der beispielsweise aus einer Nichtoxidkeramik oder aus Molybdändisilizid bestehen kann, aufgeheizt. Damit steigt also auch die Innentemperatur innerhalb der Ofenkammer 5 und ein Zahnersatzteil 7, das im vorliegenden Fall eine Brücke aus drei Zähnen ist, wird ebenfalls erhitzt. Das Zahnersatzteil 7 ist dabei innerhalb der Ofenkammer 5 auf einer Auflagefläche 8 angeordnet. Die Innentemperatur der Ofenkammer 5 wird mittels eines Temperatursensors 9 erfasst. Die Auflagefläche 8 ist eine obere Fläche der Ofentür 10, die aus einem oberen Türstein 11 und einem unteren Türstein 12 besteht. Unter Verwendung eines Antriebsmittels 13, wie eines Elektromotors, kann die Ofentür geschlossen oder geöffnet werden, wie durch den Pfeil 14 angedeutet ist. Beim Öffnen der Ofentür 10 wird die Ofentür 10 relativ zur Ofenkammer 5 nach unten verstellt, sodass frische Luft von außen einströmen kann und das Zahnersatzteil 7 entnommen werden kann. Beim Schließen der Ofentür 10 wird die Ofentür 10 mittels des Antriebsmittels 13 nach oben verstellt bis der untere Türstein 12 mit dem Heizstrahler 3 in Kontakt kommt und dadurch ein geschlossenes Volumen der Ofenkammer 5 gebildet wird.

Die Isolationsschicht 4 ist zwischen der Induktionsspule 2 und dem Heizstrahler 3 angeordnet. Die Dicke der Isolationsschicht 4 ist relativ dünn und weist eine Dicke von maximal 5 mm auf. Dadurch wird zwar verhindert, dass die Induktionsspule 2, die aus einer Kupferlegierung besteht, nicht überhitzt wird. Zugleich ist die Isolationsschicht 4 jedoch so dünn, dass durch das Abkühlen der Induktionsspule 2 auch der Heizstrahler 4 und damit die Innentemperatur der Ofenkammer 5 abgekühlt wird. Der Heizstrahler 3 kann in Form eines Zylinders gebildet sein, wobei der Innendurchmesser 15 des Heizstrahlers 3, der zugleich auch der Durchmesser der Ofenkammer 5 ist beispielsweise höchstens 90 mm betragen kann. Eine Höhe 16 der Ofenkammer kann beispielsweise höchstens 50 mm betragen. Der Sinterofen 1 umfasst ein Kühlsystem 17 mit einer Flüssigkeitskühlung, wobei die Flüssigkeitskühlung einen ersten Lüfter 18, einen zweiten Lüfter 19, einen Radiator 20 und eine Wasserpumpe 21 aufweist. In einer Abkühlphase der Wärmebehandlung kann also bei abgeschaltetem Wechselstrom der Induktionsspule 2 das Kühlsystem 17 auf Hochleistung betrieben werden. Dabei bläst der aktive erste Lüfter 18 kühle Luft 22 entlang einer Luftströmung 23, die ebenfalls zur Kühlung des Sinterofens beiträgt, zum zweiten Lüfter 19. Der zweite Lüfter 19 bläst die kühle Luft durch den Radiator 20, der wiederrum eine Kühlflüssigkeit 24, wie Wasser, abkühlt. Die Kühlflüssigkeit 24 wird dann mittels der Wasserpumpe 21 im Kühlkreislauf 25, der durch die Pfeile angedeutet ist, bewegt und kühlt damit die Induktionsspule 2 ab. Die Induktionsspule 2 ist in der Nähe des Heizstrahlers 3 angeordnet, sodass durch die Abkühlung der Induktionsspule 2 auch der Heizstrahler 3 und damit auch die Innentemperatur des Ofenvolumens 5 abgekühlt wird. Bei abgeschaltetem Wechselstrom dient also die Induktionsspule 2 als Flüssigkeitskühlung der Ofenkammer 5.

Die Planung des Zahnersatzteils 7 erfolgt mittels eines Computers 26, wobei ein 3D-Modell 27 des Zahnersatzteils 7 erzeugt wird, wobei das 3D-Modell 27 mittels einer Anzeigevorrichtung 28 angezeigt wird. In Abhängigkeit von Geometrieparametern und der Farbe des geplanten Zahnersatzteils 7 wird ein Temperaturprofil 29 für eine Sinterbehandlung bestimmt. Das Temperaturprofil 29 ist als ein Graph einer Temperatur 30 in Abhängigkeit von der Zeit 31 dargestellt. In einer ersten Phase 32 wird die Ofenkammer 5 auf eine Vortrocknen-Temperatur 33 aufgeheizt. In einer zweiten Phase wird die Vortrocknen-Temperatur für eine erste Haltezeit gehalten. In einer dritten Phase 34 wird die Temperatur in der Ofenkammer 5 bis zu einer Beladen-Temperatur, beispielsweise in der Höhe von 300°C aufgeheizt. In einer vierten Phase wird die Ofenkammer 5 mit dem zu sinternden Zahnersatzteil 7 beladen, sodass die Temperatur leicht abfällt. In einer fünften Phase 35 steigt die Temperatur in der Ofenkammer 5 mit einer zweiten Heizrate bis zu einer zweiten Haltetemperatur 36. In einer sechsten Phase wird die Induktionsspule 2 und die Flüssigkeitskühlung 17, umfassend die Lüfter 18, 19 und die Wasserpumpe 21, so angesteuert, dass die Haltetemperatur 36 für eine Dauer einer bestimmten Haltezeit gehalten wird. In der siebten Phase erfolgt eine Abkühlphase des Zahnersatzteils 7 bei geschlossener Ofentür 10 mit einer festgelegten Abkühlrate. In einer achten Phase 38 unterhalb einer bestimmten Öffnungstemperatur wird die Ofentür 10 geöffnet, sodass frische Luft von außen in die Ofenkammer 5 einströmen kann und das Zahnersatzteils 7 schneller abkühlt. Anschließend wird das Zahnersatzteil bei geöffneter Tür 10 aus dem Induktionsofen 1 entnommen. Insbesondere die Heizrate während der Aufheizphase 35 und die Abkühlrate während der Abkühlphase 37 sind abhängig von den Geometrieparametern des geplanten 3D-Modells 27. Beispielsweise wird eine maximale okklusale Wandstärke 39 parallel zu einer Zahnachse 40 des 3D-Modells bestimmt. Bei einem weiteren Verfahren wird eine größtmögliche Kugel 41 innerhalb des gesamten Volumens 42 des 3D-Modells 27 bestimmt. Ein Durchmesser dieser größtmöglichen Kugel 41 ist ein wichtiger Geometrieparameter zur Bestimmung eines passenden Temperaturprofils 29. Bei einem Durchmesser der größtmöglichen Kugel 41 von mehr als 4,5 mm dürfen beispielsweise die Heizrate und die Abkühlrate bei Zikoniumoxid 80°C/ Minute nicht überschreiten. Das Zahnersatzteil 7 wird vor der Sinterung mittels einer CAM-Bearbeitungsmaschine 44 aus einem Rohling 43 vollautomatisch herausgefräst. Der Rohling 43 besteht dabei aus einem bezüglich der Farbe passenden Sintermaterial. Bei der Planung des 3D-Modells 27 wird ein Schrumpfungseffekt während der Sinterung berücksichtigt. Das herausgefräste Zahnersatzteil 7 wird anschließend mittels des Induktionsofens 1 gesintert, wobei der Induktionsofen 1, insbesondere die Induktionsspule 2 und das Kühlsystem 17, mittels des Computers 26 so angesteuert wird, dass die Innentemperatur der Ofenkammer 5 nach dem geplanten Temperaturprofil 29 in Abhängigkeit von der Zeit verändert wird. Dadurch wird also sichergestellt, dass unerwünschte Verfärbungen oder Risse durch thermische Spannungen beim Sintern des Zahnersatzteils verhindert werden.

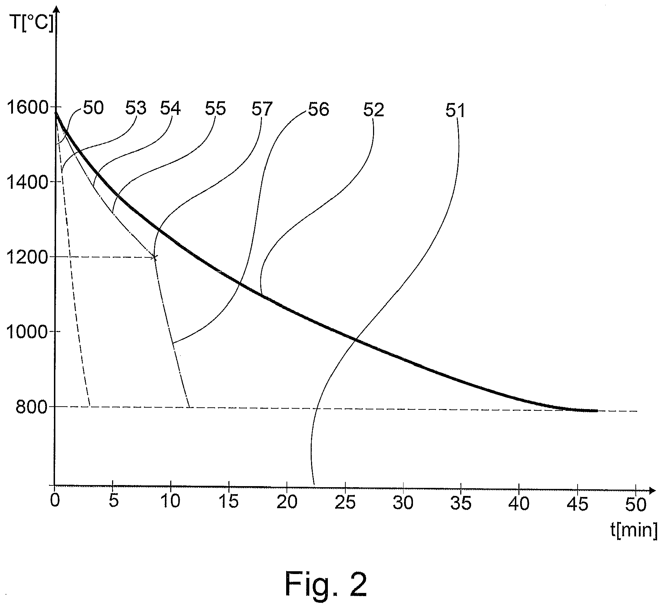

Die Fig. 2 zeigt mehrere Abkühlphasen von Temperaturprofilen, wobei die Temperatur 50 in Abhängigkeit von der Zeit 51 aufgetragen ist. Eine erste Abkühlphase 52 bezieht sich auf einen herkömmlichen Sinterofen für Zahnersatzteile, der mit spiralförmigen oder U-förmigen Widerstandsheizelementen betrieben wird. Bei geschlossener Ofentür dauert also die Abkühlphase eines solchen herkömmlichen Sinterofens von einer Sintertemperatur von 1600°C bis 800°C mehr als 45 Minuten. Damit ergibt sich eine Abkühlrate von weniger als 20°C/ Minute.

Im Vergleich dazu dauert eine zweite Abkühlphase 53 bei geschlossener Ofentür, die durch eine gestrichelte Linie dargestellt ist, nur etwa 4 Minuten, wobei die Abkühlrate etwa 200°C/ Minute beträgt. Diese zweite Abkühlphase 53 ist insbesondere für sehr kleine Zahnersatzteile, wie dünne Inlays, geeignet.

Eine dritte Abkühlphase 54 ist durch eine Strichpunktlinie dargestellt und umfasst eine Abkühlphase 55 bei geschlossener Ofentür 10 des Induktionsofens 1 aus Fig. 1 und eine Abkühlphase 56 bei geöffneter Ofentür 10. Bei einer festgelegten Öffnungstemperatur 57 wird also die Ofentür 10 des Sinterofens 1 automatisch mittels des Antriebsmittels 13 aus Fig. 1 geöffnet. Im vorliegenden Fall beträgt die Öffnungstemperatur 57 1200°C. Diese Öffnungstemperatur ist vor allem für Zirkonoxid mit hellen Farbstoffen, also der Farbklassen A1, A2 oder A3, geeignet. Für Zirkonoxid mit dunklen Farbstoffen ist eher eine niedrigere Öffnungstemperatur von etwa 1.000°C geeignet, um unerwünschte Verfärbungen zu verhindern. Die Abkühlphase 55 bei geschlossener Ofentür 10 weist eine Abkühlrate von etwa 30°C pro Minute auf. Die Abkühlphase 56 bei geöffneter Ofentür 10 weist eine höhere Abkühlrate von etwa 200°C pro Minute bis 300°C auf. Die dritte Abkühlphase 54 ist eher für größere Zahnersatzteile, wie dreigliedrige Brücken, geeignet. Denn durch die niedrigere Abkühlrate werden unerwünschte thermische Spannungen und damit Risse innerhalb des Zahnersatzteils 7 verhindert.

Im Vergleich zur Abkühlphase 52 eines herkömmlichen Sinterofens ist also deutlich erkennbar, dass die Dauer der Abkühlphase 53 für kleine Zahnersatzteile auf 4 Minuten und die Dauer der Abkühlphase 54 für größere Zahnersatzteils auf 12 Minuten verkürzt wird. Damit wird also auch die gesamte Dauer des Sinterprozesses mittels des Induktionsofens 1 verkürzt.

### Bezugszeichen

- 1: Induktionsofen, Sinterofen
- 2: Induktionsspule
- 3: Heizstrahler
- 4: Isolationsschicht
- 5: Ofenkammer, Ofenvolumen
- 6: Wechselfeld
- 7: Zahnersatzteil
- 8: Auflagefläche
- 9: Temperatursensor
- 10: Ofentür
- 11: oberer Türstein
- 12: unterer Türstein
- 13: Antriebsmittel
- 14: Pfeil
- 15: Innendurchmesser
- 16: Höhe
- 17: Kühlsystem, Flüssigkeitskühlung
- 18: erster Lüfter
- 19: zweiter Lüfter
- 20: Radiator
- 21: Wasserpumpe
- 22: kühle Luft
- 23: Luftströmung
- 24: Kühlfüssigkeit
- 25: Kühlkreislauf
- 26: Computer
- 27: 3D-Modell
- 28: Anzeigevorrichtung
- 29: Temperaturprofil
- 30: Temperatur
- 31: Zeit
- 32: erste Phase
- 33: Vortrocknen-Temperatur
- 34: dritte Phase
- 35: fünfte Phase
- 35: Aufheizphase
- 36: Haltetemperatur
- 37: Abkühlphase
- 38: achte Phase
- 39: maximale okklusale Wandstärke
- 40: Zahnachse
- 41: größtmögliche Kugel
- 42: Volumen
- 43: Rohling
- 44: CAM-Bearbeitungsmaschine
- 50: Temperatur
- 51: Zeit
- 52: erste Abkühlphase
- 53: zweite Abkühlphase
- 54: dritte Abkühlphase
- 55: Abkühlphase mit geschlossener Ofentür
- 56: Abkühlphase mit geöffneter Ofentür
- 57: Öffnungstemperatur

## Patentansprüche

1. Induktionsofen (1) zur Durchführung einer Wärmebehandlung eines Zahnersatzteils (7) umfassend eine Induktionsspule (2), einen Heizstrahler (3), eine Isolationsschicht (4) und eine Ofenkammer (5), **dadurch gekennzeichnet, dass** der Induktionsofen (1) ein Kühlsystem (17) mit einer Flüssigkeitskühlung aufweist, wobei das Kühlsystem (17) die Induktionsspule (2) und damit den neben der Induktionsspule (2) angeordneten Heizstrahler (3) abkühlt, so dass eine Innentemperatur der Ofenkammer (5) mittels des Kühlsystems (17) regulierbar ist.

2. Induktionsofen (1) nach Anspruch 1, **dadurch gekennzeichnet, dass** die Induktionsspule (2) mit Wechselstrom betrieben wird und der Heizstrahler (3) durch ein magnetisches Wechselfeld (6) der Induktionsspule (2) erhitzt wird.

3. Induktionsofen (1) nach Anspruch 1 oder 2, **dadurch gekennzeichnet, dass** der Heizstrahler (3) die Innenwand der Ofenkammer bildet, wobei innerhalb der Ofenkammer (5) das zu behandelnde Zahnersatzteil (7) angeordnet wird.

4. Induktionsofen (1) nach einem der Ansprüche 1 bis 3, **dadurch gekennzeichnet, dass** der Heizstrahler (3) in Form eines Zylinders geformt ist, wobei der Durchmesser des Heizstrahlers (3) höchstens 90 mm und die Höhe (16) des Heizstrahlers (3) höchstens 50 mm beträgt.

5. Induktionsofen (1) nach einem der Ansprüche 1 bis 4, **dadurch gekennzeichnet, dass** der Heizstrahler (3) aus einer leitfähigen Nichtoxidkeramik oder aus Molybdändisilizid hergestellt ist.

6. Induktionsofen (1) nach einem der Ansprüche 1 bis 5, **dadurch gekennzeichnet, dass** das Kühlsystem (17) einen Lüfter (18, 19), einen Radiator (20) und eine Pumpe (21) umfasst, wobei die Induktionsspule (2) aus einem hohlen Metallrohr geformt ist, das mit einer Kühlflüssigkeit (24) durchströmt wird, wobei die Kühlflüssigkeit (24) durch die Pumpe (21) im Kühlkreislauf bewegt wird, wobei der Radiator (20) vom aktiven Lüfter (18) mit kühler Luft (22) gekühlt wird, um die Kühlflüssigkeit (24) abzukühlen.

7. Induktionsofen (1) nach einem der Ansprüche 6, **dadurch gekennzeichnet, dass** der Induktionsofen (1) eine Kühlregelung des Kühlsystems (17) aufweist, wobei innerhalb der Ofenkammer (5) ein Temperatursensor (9) angeordnet ist, der eine Innentemperatur der Ofenkammer (5) erfasst, wobei die Kühlregelung (17) den Lüfter (18, 19) und die Pumpe (21) so ansteuert, dass eine Temperatur der Induktionsspule (2) und damit die Innentemperatur innerhalb der Ofenkammer (5) reguliert wird.

8. Induktionsofen (1) nach einem der Ansprüche 1 bis 7, **dadurch gekennzeichnet, dass** die Isolationsschicht (4) zwischen dem Heizstrahler (3) und der Induktionsspule (2) angeordnet ist, wobei die Isolationsschicht (4) eine Dicke von höchstens 5 mm beträgt.

9. Induktionsofen (1) nach einem der Ansprüche 1 bis 8, **dadurch gekennzeichnet, dass** der Induktionsofen (1) eine Ofentür (10) aufweist, wobei die Ofentür eine Auflagefläche (8) aufweist, worauf das zu behandelnde Zahnersatzteil (7) positioniert wird, wobei die Auflagefläche (8) bei geschlossener Ofentür (10) eine untere Innenfläche der Ofenkammer (5) bildet.

10. Verfahren zur Durchführung einer Wärmebehandlung unter Verwendung des Induktionsofens (1) nach einem der Ansprüche 1 bis 9, **dadurch gekennzeichnet, dass** das Kühlsystem (17) die Induktionsspule (2) und damit den neben der Induktionsspule (2) angeordneten Heizstrahler (3) abkühlt, so dass eine Innentemperatur der Ofenkammer (5) mittels des Kühlsystems (17) reguliert wird.

11. Verfahren nach Anspruch 10, **dadurch gekennzeichnet, dass** mittels einer Kühlregelung des Kühlsystems (17) die Innentemperatur der Ofenkammer (5) so geregelt wird, dass in einer Aufheizphase (35) bei geschlossener Ofentür (10) die Innentemperatur der Ofenkammer (5) mit einer festgelegten Heizrate zwischen 30 °C/Minute und 300 °C/Minute erhöht wird oder in einer Abkühlphase (37) bei geschlossener Ofentür (10) die Innentemperatur der Ofenkammer (5) mit einer festgelegten Abkühlrate (37) zwischen 30 °C/Minute und 200 °C/Minute fällt.

12. Verfahren nach Anspruch 11, **dadurch gekennzeichnet, dass** die Wärmebehandlung eine Sinterung ist, wobei in Abhängigkeit von Geometrieparametern des zu sinternden Zahnersatzteils (7) die Abkühlrate der Abkühlphase (37) festgelegt wird, wobei die Abkühlrate bei kleinen Zahnersatzteilen, wie einer Krone eines einzelnen Zahns, zwischen 100 und 200 °C/Minute beträgt, wobei die Abkühlrate bei größeren Zahnersatzteilen (7), wie einer mehrgliedrigen Brücke bestehend aus mindestens drei Zähnen, zwischen 30 und 60 °C/Minute beträgt.

13. Verfahren nach Anspruch 11 oder 12, **dadurch gekennzeichnet, dass** unter Verwendung der bekannten Geometrieparameter des Zahnersatzteils (7) und einer gewünschten Farbe des Zahnersatzteils (7) ein passender Temperaturverlauf mittels eines Computers automatisch bestimmt wird oder ein passender Temperaturverlauf aus einer Vielzahl von Temperaturverläufen aus einer Datenbank ausgewählt wird, wobei der Temperaturverlauf eine Aufheizphase (35) mit einer bestimmten Heizrate, eine Haltephase mit einer bestimmten Haltetemperatur (36), eine erste Abkühlphase mit einer bestimmten Abkühlrate bei geschlossener Ofentür (10) sowie eine zweite Abkühlphase bei geöffneter Ofentür (10), deren Beginn durch eine Öffnungstemperatur (57) für die Ofentür (10) bestimmt wird, aufweist, wobei eine passende Heizrate oder Abkühlrate anhand der bekannten Geometrieparameter des Zahnersatzteils (7) abgeleitet wird und die Kühlregelung des Kühlsystems (17) entsprechend angesteuert wird, um die gewünschte Heizrate oder Abkühlrate zu erreichen.

14. Verfahren nach einem der Ansprüche 10 bis 13, **dadurch gekennzeichnet, dass** die Ofentür (10) bei einer festgelegten Öffnungstemperatur (57) geöffnet wird, wobei die Öffnungstemperatur (57) in Abhängigkeit von der gewünschten Farbe des Zahnersatzteils (7) festgelegt wird.

15. Verfahren nach Anspruch 14, **dadurch gekennzeichnet, dass** das Zahnersatzteil (7) aus einem voreingefärbten Zirkonoxid mit Farbstoffen besteht, wobei die Öffnungstemperatur (57) bei einem Zirkonoxid mit hellen Farbstoffen höchstens 1300 °C beträgt, wobei die Öffnungstemperatur (57) bei einem Zirkonoxid mit dunklen Farbstoffen höchstens 1100 °C beträgt.

16. Verfahren nach Anspruch 15, **dadurch gekennzeichnet, dass** die Öffnungstemperatur (57) höchstens 700 °C beträgt.

17. Verfahren nach einem der Ansprüche 14-16, **dadurch gekennzeichnet, dass** die Ofentür (10) bei der festgelegten Öffnungstemperatur (57) automatisch geöffnet wird.

18. Verfahren nach einem der Ansprüche 14-16, **dadurch gekennzeichnet, dass** bei der festgelegten Öffnungstemperatur (57) ein akustisches oder optisches Signal zur Anzeige des Erreichens der Öffnungstemperatur (57) erfolgt.

19. Verfahren nach einem der Ansprüche 10-18, **dadurch gekennzeichnet, dass** die Wärmebehandlung des Zahnersatzteils (7) eine Sinterung, eine Kristallisierung, eine Glasurbeschichtung, eine Kombination aus einer Sinterung und einer Glasurbeschichtung oder eine Kombination aus einer Kristallisierung und einer Glasurbeschichtung ist, wobei in einer Aufheizphase bei geschlossener Ofentür (10) die Innentemperatur der Ofenkammer (5) mit einer festgelegten Heizrate aufgeheizt wird, wobei in einer Abkühlphase (37) bei geschlossener Ofentür (10) die Innentemperatur der Ofenkammer (5) mit einer festgelegten Abkühlrate abgekühlt wird.

## Claims

1. Induction furnace (1) for carrying out a heat treatment of a dental replacement part (7), comprising an induction coil (2), a radiant heater (3), an insulation layer (4) and a furnace chamber (5), **characterized in that** the induction furnace (1) comprises a cooling system (17) with a liquid cooling system.

2. Induction furnace (1) according to Claim 1, **characterized in that** the induction coil (2) is operated with alternating current and the radiant heater (3) is heated by an alternating magnetic field (6) of the induction coil (2).

3. Induction furnace (1) according to Claim 1 or 2, **characterized in that** the radiant heater (3) forms the inner wall of the furnace chamber, wherein the dental replacement part to be treated (7) is positioned inside the furnace chamber (5).

4. Induction furnace (1) according to any one of Claims 1 to 3, **characterized in that** the radiant heater (3) is formed in the shape of a cylinder, wherein the diameter of the radiant heater (3) is no more than 90 mm and the height (16) of the radiant heater (3) is no more than 50 mm.

5. Induction furnace (1) according to any one of Claims 1 to 4, **characterized in that** the radiant heater (3) is made of a conductive non-oxide ceramic or molybdenum disilicide.

6. Induction furnace (1) according to any one of Claims 1 to 5, **characterized in that** the cooling system (17) comprises a fan (18, 19), a radiator (20) and a pump (21), wherein the induction coil (2) is formed of a hollow metal tube through which a cooling liquid (24) flows, wherein the cooling liquid (24) is moved in the cooling circuit by the pump (21), wherein the radiator (20) is cooled with cool air (22) by the active fan (18) to cool the cooling liquid (24).

7. Induction furnace (1) according to Claim 6, **characterized in that** the induction furnace (1) comprises a cooling control of the cooling system (17), wherein a temperature sensor (9) which acquires an internal temperature of the furnace chamber (5) is disposed within the furnace chamber (5), wherein the cooling control (17) controls the fan (18, 19) and the pump (21) such that a temperature of the induction coil (2) and thus the internal temperature inside the furnace chamber (5) is regulated.

8. Induction furnace (1) according to any one of Claims 1 to 7, **characterized in that** the insulation layer (4) is disposed between the radiant heater (3) and the induction coil (2), wherein the insulation layer (4) has a thickness of no more than 5 mm.

9. Induction furnace (1) according to any one of Claims 1 to 8, **characterized in that** the induction furnace (1) comprises a furnace door (10), wherein the furnace door comprises a support surface (8) upon which the dental replacement part (7) to be treated is positioned, wherein the support surface (8) forms a lower inner surface of the furnace chamber (5) when the furnace door (10) is closed.

10. Method for carrying out a heat treatment using the induction furnace (1) according to any one of Claims 1 to 9, **characterized in that** the cooling system (17) cools the induction coil (2) and thus the radiant heater (3) disposed next to the induction coil (2), so that an internal temperature of the furnace chamber (5) is controlled by means of the cooling system (17).

11. Method according to Claim 10, **characterized in that** the internal temperature of the furnace chamber (5) is controlled by means of a cooling control of the cooling system (17) in such a way that, in a heating phase (35) when the furnace door (10) is closed, the internal temperature of the furnace chamber (5) is increased at a set heating rate between 30°C/minute and 300°C/minute or, in a cooling phase (37) when the furnace door (10) is closed, the internal temperature of the furnace chamber (5) decreases at a set cooling rate (37) between 30°C/minute and 200°C/minute.

12. Method according to Claim 11, **characterized in that** the heat treatment is sintering, wherein the cooling rate of the cooling phase (37) is set as a function of geometric parameters of the dental replacement part (7) to be sintered, wherein the cooling rate for small dental replacement parts, such as a crown of a single tooth, is between 100 and 200°C/minute, wherein the cooling rate for larger dental replacement parts (7), such as a multi-part bridge consisting of at least three teeth, is between 30 and 60°C/minute.

13. Method according to Claim 11 or 12, **characterized in that** a suitable temperature profile is automatically determined by means of a computer using the known geometric parameters of the dental replacement part (7) and a desired color of the dental replacement part (7), or a suitable temperature profile is selected from a wide range of temperature profiles from a database, wherein the temperature profile comprises a heating phase (35) with a specific heating rate, a holding phase with a specific holding temperature (36), a first cooling phase with a specific cooling rate when the furnace door (10) is closed and a second cooling phase when the furnace door (10) is open, the beginning of which is determined by an opening temperature (57) for the furnace door (10), wherein a suitable heating rate or cooling rate is derived using the known geometric parameters of the dental replacement part (7) and the cooling control of the cooling system (17) is controlled accordingly in order to achieve the desired heating rate or cooling rate.

14. Method according to any one of Claims 10 to 13, **characterized in that** the furnace door (10) is opened at a set opening temperature (57), wherein the opening temperature (57) is set as a function of the desired color of the dental replacement part (7).

15. Method according to Claim 14, **characterized in that** the dental replacement part (7) consists of a precolored zirconium oxide with colorants, wherein the opening temperature (57) for a zirconium oxide with light colorants is at most 1300°C, wherein the opening temperature (57) for a zirconium oxide with dark colorants is at most 1100°C.

16. Method according to Claim 15, **characterized in that** the opening temperature (57) is at most 700°C.

17. Method according to any one of Claims 14-16, **characterized in that** the furnace door (10) is automatically opened at the set opening temperature (57) .

18. Method according to any one of Claims 14-16, **characterized in that**, at the set opening temperature (57), an acoustic or visual signal is generated to indicate that the opening temperature (57) has been reached.

19. Method according to any one of Claims 10-18, **characterized in that** the heat treatment of the dental replacement part (7) is sintering, crystallization, glazing, a combination of sintering and glazing or a combination of crystallization and glazing, wherein, in a heating phase when the furnace door (10) is closed, the internal temperature of the furnace chamber (5) is increased at a set heating rate, wherein, in a cooling phase (37) when the furnace door (10) is closed, the internal temperature of the furnace chamber (5) is decreased at a set cooling rate.

## Revendications

1. Four à induction (1) pour la réalisation d'un traitement thermique d'un élément prothétique dentaire (7), comprenant une bobine d'induction (2), un élément de chauffage radiant (3), une couche d'isolation (4) et une chambre de four (5), **caractérisé en ce que** le four à induction (1) présente un système de refroidissement (17) à refroidissement par liquide.

2. Four à induction (1) selon la revendication 1, **caractérisé en ce que** la bobine d'induction (2) fonctionne en courant alternatif et l'élément de chauffage radiant (3) est chauffé par un champ alternatif magnétique (6) de la bobine d'induction (2).

3. Four à induction (1) selon la revendication 1 ou 2, **caractérisé en ce que** l'élément de chauffage radiant (3) forme la paroi interne de la chambre du four, l'élément prothétique dentaire (7) à traiter étant disposé à l'intérieur de la chambre (5) du four.

4. Four à induction (1) selon l'une des revendications 1 à 3, **caractérisé en ce que** l'élément de chauffage radiant (3) est conçu sous la forme d'un cylindre, le diamètre de l'élément de chauffage radiant (3) étant au maximum de 90 mm et la hauteur (16) de l'élément de chauffage radiant (3) étant au maximum de 50 mm.

5. Four à induction (1) selon l'une des revendications 1 à 4, **caractérisé en ce que** l'élément de chauffage radiant (3) est fabriqué à partir d'une céramique conductrice sans oxyde ou de disiliciure de molybdène.

6. Four à induction (1) selon l'une des revendications 1 à 5, **caractérisé en ce que** le système de refroidissement (17) comprend un ventilateur (18, 19), un radiateur (20) et une pompe (21) ; la bobine d'induction (2) étant conçue à partir d'un tube métallique creux qui est traversé par un liquide de refroidissement (24), le liquide de refroidissement (24) étant déplacé par la pompe (21) dans le circuit de refroidissement, le radiateur (20) étant refroidi par de l'air froid (22) par le ventilateur actif (18), afin de refroidir le liquide de refroidissement (24).

7. Four à induction (1) selon la revendication 6, **caractérisé en ce que** le four à induction (1) présente une régulation de refroidissement du système de refroidissement (17) ; un capteur de température (9) étant disposé à l'intérieur de la chambre (5) du four pour établir la température interne de la chambre (5) du four, la régulation de refroidissement (17) commandant le ventilateur (18, 19) et la pompe (21) de manière à réguler la température de la bobine d'induction (2) et, ainsi, la température interne régnant à l'intérieur de la chambre (5) du four.

8. Four à induction (1) selon l'une des revendications 1 à 7, **caractérisé en ce que** la couche d'isolation (4) est disposée entre l'élément de chauffage radiant (3) et la bobine d'induction (2), la couche d'isolation (4) ayant une épaisseur maximale de 5 mm.

9. Four à induction (1) selon l'une des revendications 1 à 8, **caractérisé en ce que** le four à induction (1) présente une porte de four (10), la porte de four présentant une surface d'appui (8) sur laquelle l'élément prothétique dentaire (7) à traiter est placé, la surface d'appui (8) formant, une fois la porte (10) du four fermée, une surface interne inférieure de la chambre (5) du four.

10. Procédé de réalisation d'un traitement thermique au moyen du four à induction (1) selon l'une des revendications 1 à 9, **caractérisé en ce que** le système de refroidissement (17) refroidit la bobine d'induction (2) et ainsi l'élément de chauffage radiant (3) disposé à côté de la bobine d'induction (2), de manière à réguler la température interne de la chambre (5) du four au moyen du système de refroidissement (17).

11. Procédé selon la revendication 10, **caractérisé en ce qu'**une régulation de refroidissement du système de refroidissement (17) permet de réguler la température interne de la chambre (5) du four de manière que la température interne de la chambre (5) du four, dans une phase de chauffage (35) avec la porte (10) du four fermée, subisse une augmentation à une vitesse de chauffage définie comprise entre 30 °C par minute et 300 °C par minute ou, dans une phase de refroidissement (37) avec la porte (10) du four fermée, la température interne de la chambre (5) du four chute avec une vitesse de refroidissement (37) définie comprise entre 30 °C par minute et 200 °C par minute.

12. Procédé selon la revendication 11, **caractérisé en ce que** le traitement thermique est un frittage, la vitesse de refroidissement de la phase de refroidissement (37) étant définie en fonction de paramètres de géométrie de l'élément prothétique dentaire (7) à fritter, la vitesse de refroidissement pour de petits éléments prothétiques dentaires, tels qu'une couronne d'une seule dent, étant comprise entre 100 et 200 °C par minute, la vitesse de refroidissement pour de plus gros éléments prothétiques dentaires (7), tels qu'un bridge à plusieurs éléments constitué d'au moins trois dents, étant comprise entre 30 et 60 °C par minute.

13. Procédé selon la revendication 11 ou 12, **caractérisé en ce que**, compte tenu du paramètre de géométrie connu de l'élément prothétique dentaire (7) et d'une couleur souhaitée de l'élément prothétique dentaire (7), un profil de température adapté est déterminé automatiquement au moyen d'un ordinateur ou un profil de température adapté est choisi dans une base de données parmi une pluralité de profils de température, le profil de température présentant une phase de chauffage (35) avec une vitesse de chauffage déterminée, une phase de maintien avec une température de maintien (36) déterminée, une première phase de refroidissement avec une vitesse de refroidissement déterminée avec la porte (10) du four fermée ainsi qu'une deuxième phase de refroidissement avec la porte (10) du four ouverte, dont le début est déterminé par une température d'ouverture (57) relative à la porte (10) du four, une vitesse de chauffage ou une vitesse de refroidissement adaptée étant dérivée à l'aide du paramètre de géométrie connu de l'élément prothétique dentaire (7) et la régulation de refroidissement du système de refroidissement (17) étant commandée de manière correspondante, afin d'atteindre la vitesse de chauffage ou la vitesse de refroidissement souhaitée.

14. Procédé selon l'une des revendications 10 à 13, **caractérisé en ce que** la porte (10) du four est ouverte à une température d'ouverture (57) définie, la température d'ouverture (57) étant définie en fonction de la couleur souhaitée de l'élément prothétique dentaire (7).

15. Procédé selon la revendication 14, **caractérisé en ce que** l'élément prothétique dentaire (7) est constitué d'un oxyde de zirconium pré-teinté avec du colorant, la température d'ouverture (57) pour un oxyde de zirconium avec un colorant clair étant au maximum de 1300 °C, la température d'ouverture (57) pour un oxyde de zirconium avec un colorant foncé étant au maximum de 1100 °C.

16. Procédé selon la revendication 15, **caractérisé en ce que** la température d'ouverture (57) est au maximum de 700 °C.

17. Procédé selon l'une des revendications 14 à 16, **caractérisé en ce que** la porte (10) du four est ouverte automatiquement à la température d'ouverture (57) définie.

18. Procédé selon l'une des revendications 14 à 16, **caractérisé en ce qu'**à la température d'ouverture (57) définie, un signal acoustique ou optique est émis pour indiquer que la température d'ouverture (57) est atteinte.

19. Procédé selon l'une des revendications 10 à 18, **caractérisé en ce que** le traitement thermique de l'élément prothétique dentaire (7) est un frittage, une cristallisation, un revêtement de glaçure, une combinaison de frittage et de revêtement de glaçure ou une combinaison de cristallisation et de revêtement de glaçure ; lors d'une phase de chauffage avec la porte (10) du four fermée, la température interne de la chambre (5) du four étant augmentée avec une vitesse de chauffage définie, et dans une phase de refroidissement (37) avec la porte (10) du four fermée, la température interne de la chambre (5) du four étant abaissée avec une vitesse de refroidissement définie.
